# EUROPEAN PATENT SPECIFICATION

(11) **EP 3 375 823 B1**
(45) Date of publication and mention of the grant of the patent: **24.07.2019**
(21) Application number: 17866404.1
(22) Date of filing: 11.10.2017
(51) Int. Cl.: C08L 83/04, C08K 5/5415, C08K 5/00, C08K 5/13, C08K 5/37, C08K 5/49, G02B 6/00, C08K 5/5419

(54) **POLYCARBONATE RESIN COMPOSITION**
POLYCARBONATHARZZUSAMMENSETZUNG
COMPOSITION DE RÉSINE POLYCARBONATE

(30) Priority: 01.11.2016 KR 20160144604
(43) Date of publication of application: 19.09.2018
(73) Proprietor: LG Chem, Ltd., Seoul 07336 (KR)
(72) Inventor: SON, Young Wook, Daejeon 34122 (KR); CHUN, Byoungkue, Daejeon 34122 (KR); HONG, Moo Ho, Daejeon 34122 (KR); KO, Un, Daejeon 34122 (KR); KO, Tae Yun, Daejeon 34122 (KR)
(74) Representative: Goddar, Heinz J.
(86) International application number: PCT/KR2017/011189
(87) International publication number: WO 2018/084444

(56) References cited:
- JP-A- 2005 096 421
- JP-A- 2009 155 381
- JP-A- 2014 101 407
- KR-A- 20140 096 953
- KR-A- 20150 003 438
- KR-B1- 100 699 560
- US-A1- 2005 049 368
- US-A1- 2014 146 569
- US-B1- 6 184 312

## Description

The present invention relates to a polycarbonate resin composition.

Recently, as liquid crystal display devices have become thinner and larger, the thickness of parts used for them is becoming thinner and thinner. A liquid crystal display ("LCD") is equipped with a backlight, which is a light emitting part that emits light from the back of LCD, and a light guide plate or a diffusion plate for diffusing or transmitting light is used depending on the type and position of light source. The thickness of the light guide plate also becomes thinner and thinner in accordance with the recent trend, and the general level of the light guide plate actually used is around 0.5 mm in thickness, but the thinnest is up to about 0.3 mm, and the thickness tends to become thinner in future.

In accordance with the thinning trends, the use of edge type backlight unit in which LEDs are mounted to the corner of the backlight is increasing, instead of cold cathode fluorescent lamps (CCFLs) which have been mainly used in the past. In the edge type backlight unit, light emitted from a light source mounted to the corner is transmitted through the light guide plate, and part of the light transmitted through the plate is scattered by a light scattering layer applied to the surface of the plate, whereby the liquid crystal display device is illuminated by the surface light source that uniformly emits light on the entire surface. The light scattering layer is formed by transferring or printing a dot pattern on the surface of the light guide plate. Recently, a fine prism structure is also transferred to increase the light efficiency.

Since the light guide plate requires high light transmittance, PMMA, which is an acrylic resin, is generally used as a material of the light guide plate. Although acrylic resins have high light transmittance, they are insufficient in mechanical strength and thus are not suitable for application to a thin light guide plate, and also they have insufficient heat resistance and thus are vulnerable to heat generated in electronic equipment, which are disadvantageous.

Polycarbonate has attracted attention instead of such an acrylic resin. Polycarbonate is superior in mechanical strength as compared with acrylic resin and thus can be used as a material for a thin light guide plate. In addition, since polycarbonate is excellent in heat resistance and flame retardancy, it is gradually replacing the acrylic resin in LED backlight unit and lighting apparatus with a large amount of heat generation. However, since polycarbonate has a lower total light transmittance than an acrylic resin, it is required that polycarbonate has a light transmittance corresponding to that of an acrylic resin while maintaining the advantages of polycarbonate.

In this connection, Japanese Patent Laid-Open Publication No. 2008-045131 discloses that PMMA having a viscosity average molecular weight (Mv) of 20,000 to 60,000 among an acrylic resin is blended in a range of 0.1 to 0.3 phr with a polycarbonate having an Mv of 15,000 to 40,000 to exhibit excellent photoconductivity. However, it is still necessary to improve physical properties such as heat resistance.

Given the above circumstances, the present inventors have conducted intensive studies about a material which can be used as a material for the light guide plate, and found that when polycarbonate is combined with 1,1,5,5-tetramethyl-3,3-diphenyltrisiloxane as described below, it exhibits remarkably improved light transmittance or the like, and thus can be used as a material for a light guide plate, thereby completing the present invention.

### [Detailed Description of the Invention]

### [Technical Problem]

The present invention provides a polycarbonate resin composition.

### [Technical Solution]

Hereinafter, a polycarbonate resin composition or the like according to a specific embodiment of the present invention will be described.

According to one embodiment of the invention, there is provided a polycarbonate resin composition comprising polycarbonate and 1,1,5,5-tetramethyl-3,3-diphenyltrisiloxane.

The present inventors have found that when polycarbonate is combined with 1,1,5,5-tetramethyl-3,3-diphenyltrisiloxane, it can exhibit superior optical properties as compared with those of a conventional polycarbonate resin composition, thereby completing the present invention.

### Polycarbonate

The term "polycarbonate" as used herein means a polymer produced by reacting a diphenolic compound, a phosgene, a carbonic acid ester, or a combination thereof. Polycarbonate is extremely excellent in heat resistance, impact resistance, mechanical strength, transparency and the like, and thus is widely used in the production of compact discs, transparent sheets, packaging materials, automobile bumpers, ultraviolet blocking films and the like, In particular, in the present invention, polycarbonate is used as a material of the light guide layer.

Examples of the diphenolic compound include hydroquinone, resorcinol, 4,4'-dihydroxydiphenyl, 2,2-bis(4-hydroxyphenyl) propane (also referred to as 'bisphenol A'), 2,4-bis(4-hydroxyphenyl)-2-methylbutane, bis(4-hydroxyphenyl)methane, 1,1-bis(4-hydroxyphenyl)cyclohexane, 2,2-bis(3-chloro-4-hydroxyphenyl)propane, 2,2-bis(3,5-dimethyl-4-hydroxyphenyl)propane, 2,2-bis(3,5-dichloro-4-hydroxyphenyl)propane, 2,2-bis(3,5-dibromo-4-hydroxyphenyl)propane, bis(4-hydroxyphenyl)sulfoxide, bis(4-hydroxyphenyl)ketone, bis(4-hydroxyphenyl)ether and the like. As an example, the polycarbonate can be a polymer produced by reacting 4,4'-hydroxydiphenyl and 2,2-bis(4-hydroxyphenyl)propane.

The polycarbonate may be a mixture of copolymers prepared from two or more diphenols. In addition, as the polycarbonate, a linear polycarbonate, a branched polycarbonate, a polyester carbonate copolymer resin and the like can be used.

Examples of the linear polycarbonate may include polycarbonate or the like prepared from bisphenol-A. The branched polycarbonates may be those prepared by reacting a polyfunctional aromatic compound such as trimellitic anhydride and trimellitic acid with a diphenol and a carbonate. The polyfunctional aromatic compound may be contained in an amount of 0.05 to 2 mol% based on the total amount of the branched polycarbonate. Examples of the polyester carbonate copolymer resin may include those prepared by reacting a bifunctional carboxylic acid with a diphenol and a carbonate. As the carbonate, diaryl carbonate such as diphenyl carbonate, ethylene carbonate and the like may be used.

Preferably, the polycarbonate has a weight average molecular weight of 14,000 to 30,000 g/mol. Within the above range, the moldability and workability are excellent during the production of thin film products.

### 1,1,5,5-Tetramethyl-3,3-diphenyltrisiloxane

The polycarbonate resin composition includes polycarbonate and 1,1,5,5-tetramethyl-3,3-diphenyltrisiloxane, and thus can exhibit superior optical properties as compared with those of a conventional polycarbonate resin composition.

The 1,1,5,5-tetramethyl-3,3-diphenyltrisiloxane can be contained in an amount of 0.01 to 0.3 parts by weight or 0.01 to 0.2 parts by weight based on 100 parts by weight of the polycarbonate. Within this range, it is possible to provide a polycarbonate resin composition having excellent mold releasability and thus excellent optical properties while suppressing the yellowing phenomenon or mold adhesion phenomenon.

The polycarbonate resin composition can further include an antioxidant, a hydrolysis-resistant agent, a brightness-improving agent or a mixture thereof.

### Antioxidant

The antioxidant prevents oxidation of the polycarbonate resin composition and the molded article formed therefrom, and thus maintains their physical properties. As such antioxidant, a phenol-based antioxidant, a phosphorus-based antioxidant, a thio-based antioxidant, a mixture thereof, or the like can be used.

As the phenol-based antioxidant, one or more selected from the group consisting of 2,6-di-tert-butyl-4-methylphenol, tetrakis[methylene-3-(3,5-di-tert-butyl-4-hydroxyphenyl)propionate]methane, octadecyl-3,5-di-tert-butyl-4-hydroxyhydrocinnamate and 2,2-methylenebis(4-methyl-6-tert-butylphenol) can be used. As the phosphorus-based antioxidant, one or more selected from the group consisting of tris(2,4-di-tert-butylphenyl)phosphite and bis(2,4-dicocumylphenyl)pentaerythritol diphosphite can be used. As the thio-based antioxidant, one or more selected from the group consisting of dilauryl thiodipropionate, distearyl thiodipropionate and dimyristyl thiodipropionate can be used. Among them, it is possible to improve not only the antioxidant effect but also the moldability and optical properties by using the phosphorus-based antioxidant.

The antioxidant may be contained in an amount of 0.01 to 0.15 parts by weight based on 100 parts by weight of the polycarbonate. Within this range, the phenomenon of deterioration of physical properties due to oxidation can be effectively suppressed.

### Hydrolysis-resistant agent

The hydrolysis-resistant agent improves the hydrolysis resistance of the polycarbonate resin composition and the molded article formed therefrom. As such hydrolysis-resistant agent, an epoxy group-containing polymer or the like may be used.

As the epoxy group-containing polymer, a polymer in which an epoxy group is introduced into its side chain by homopolymerizing or copolymerizing monomers having an epoxy functional group and a reactive functional group, such as glycidyl(meth)acrylate, and a polymer in which an epoxy group is introduced into its terminal by reacting a polyol with epichlorohydrin or the like can be used.

As the epoxy group-containing polymer, commercially available products such as Joncryl™ ADR-4370-F manufactured by BASF, etc. may be used.

The hydrolysis-resistant agent can be contained in an amount of 0.02 to 0.2 parts by weight based on 100 parts by weight of the polycarbonate. Within this range, sufficient hydrolysis resistance and color stability can be imparted to the polycarbonate resin composition and the molded articles formed therefrom.

### Brightness-improving agent

The brightness-improving agent may be used to reinforce the light transmittance of the polycarbonate. As such brightness-improving agent, a polymer containing oxyalkylene repeating units can be used.

As the polymer containing oxyalkylene repeating units, a polymer prepared by copolymerizing a cyclic aliphatic ether compound or an aliphatic diol with an alkylene oxide may be used, or a copolymer in which a terminal group of poly(alkylene oxide) is capped with epichlorohydrin can be used. As such polymer containing oxyalkylene repeating units, commercially available products such as Polycerin DCB-2000 manufactured by NOF Corporation or DER 732 manufactured by DOW Chemical Company, etc. can be used.

The brightness-improving agent can be contained in an amount of 0.1 to 0.5 parts by weight based on 100 parts by weight of the polycarbonate. Within this range, the light transmittance can be improved without lowering the physical properties of the polycarbonate resin composition and the molded article formed therefrom.

### Resin composition

The resin composition according to one embodiment of the present invention may further include conventional additives known in the art in addition to the above-mentioned components. As a non-limiting example, a heat stabilizer, a plasticizer, an antistatic agent, a nucleating agent, a flame retardant, a lubricant, an impact modifier, a fluorescent whitening agent, an ultraviolet absorber or the like can be further included.

The resin composition is produced by mixing the above-mentioned components, and it is desirable to melt-knead and produce into pellets in order to produce an optical molded article. The melt kneading may be carried out by a method commonly used in the art, for example, a method using a ribbon blender, a Henschel mixer, a Banbury mixer, a drum tumbler, a single screw extruder, a twin screw extruder, a co-kneader, a multi-screw extruder and the like. The temperature of the melt-kneading can be suitably adjusted as needed, and preferably it may be adjusted to a temperature of 200 to 300°C.

### Optical molded article

In addition, the resin composition according to one embodiment of the present invention may provide an optical molded article. As one example, the optical molded article may be a light guide plate.

The light guide plate is one of the backlight unit parts of the liquid crystal display device and performs the function of uniformly dispersing the light emitted from the light source over the entire screen area. Since the light emitted from the light source passes through the light guide plate, the light guide plate must have excellent transparency, that is, light transmittance. In addition, since the light guide plate is molded at high temperature and is operated at a high temperature, excellent high temperature stability is required.

By using the resin composition according to the above embodiment, it is possible to provide a light guide plate that can satisfy the light transmittance and high temperature stability.

The light guide plate can be produced by a method known in the technical field to which the invention pertains. For example, the light guide plate can be produced by applying a molding process such as an injection molding process, an injection compression molding process, an extrusion molding process, a vacuum molding process, a blow molding process, a press molding process, an air-pressure molding process, a foam molding process, a thermal bending molding process, a compression molding process, a calendar molding process, a rotary molding process, or the like, using the melt-kneaded product or pellet of the resin composition according to the present invention as a raw material.

The thickness of the light guide plate can be appropriately adjusted according to the purpose of use, and the shape of the light guide plate can also have a flat plate shape or a curved shape depending on the purpose of use.

### [Advantageous Effects]

The polycarbonate resin composition according to one embodiment of the present invention exhibits excellent optical properties, and thus can be used as a material for a light guide plate.

### [DETAILED DESCRIPTION OF THE EMBODIMENTS]

The function and effect of the invention will be described in more detail through concrete examples of the invention below. However, these examples are provided only for illustration purposes, and should not be construed as limiting the present invention to these examples.

### Materials Used

The following materials were used in Examples and Comparative Examples described below.

### <Resin>

PC: Bisphenol A type linear polycarbonate having a weight average molecular weight of 20,000 g/mol and MFR (300°C, 1.2 kg) of 60 g/min

### <Silicon Additive>

DPTS: 1,1,5,5-tetramethyl-3,3-diphenyltrisiloxane
KR-511: Trade name KR-511, manufactured by Shinetsu Co.

### <Antioxidant>

DP9228: Cas No. 154862-43-8;

### Bis(2,4-dicumylphenyl)pentaerythritol diphosphite

P-168: Cas No. 31570-04-4; Tris(2,4-di-tert-butylphenyl)phosphite

### <Hydrolysis-resistant agent>

ADR4370F: Trade name: Joncryl ADR 4370-F, manufactured by BASF
KD242GHF: Cas No. 25036-25-3; Trade name KD242GHF, manufactured by KUKDO Chemical

### <Brightness-improving agent>

DCB2000: Trade name Polycerin DCB-2000, manufactured by NOF Corporation
DER732: Trade name DER 732, manufactured by DOW Chemical Company

### Examples and Comparative Examples

After mixing the respective components with the content as shown in Table 1 below, pellet samples were prepared at a rate of 80 kg per hour in a twin screw extruder (L/D = 36, Φ=45, barrel temperature: 240°C).

**[Table 1]**

| | Silicon Additive | | Antioxidant | | Hydrolysis-resistant agent | | Brightness-improving agent | |
|---|---|---|---|---|---|---|---|---|
| | DPTS | KR511 | DP9228 | P-168 | ADR4370 F | KD242 GHF | DCB2 000 | DER7 32 |
| Example 1 | 400 | | 1500 | | 800 | | 3000 | 800 |
| Example 2 | 400 | | 1500 | | 400 | 400 | 3000 | 800 |
| Example 3 | 400 | | | 1500 | 400 | 400 | 3000 | 800 |
| Comparative Example 1 | | 400 | 1500 | | 800 | | 3000 | 800 |
| Comparative Example 2 | | 400 | 1500 | | 400 | 400 | 3000 | 800 |

| | | | | | | | | |
|---|---|---|---|---|---|---|---|---|
| (Unit: *µ*g/g; weight (unit: *µ*g) per PC 1g) | | | | | | | | |

### Experimental Example: Evaluation of Physical Properties of Polycarbonate Resin Composition

The pellets prepared in Examples and Comparative Examples were injection-molded into samples having a width of 150 mm, a length of 80 mm, and a thickness of 4 mm.

The transmittance of long-wavelength light and the color of long-wavelength light were measured by irradiating in a perpendicular direction to a thickness of the sample using a spectrophotometer U-4100 available from Hitachi. The results are shown in Table 2 below.

**[Table 2]**

| | Color of long-wavelength light | Transmittance of long-wavelength light |
|---|---|---|
| Example 1 | 8.0 | 82.05% |
| Example 2 | 7.3 | 82.99% |
| Example 3 | 7.8 | 83.65% |
| Comparative Example 1 | 9.2 | 77.25% |
| Comparative Example 2 | 9.0 | 78.86% |

Referring to Table 2, when the polycarbonate is combined with 1,1,5,5-tetramethyl-3,3-diphenyltrisiloxane, both the color of long-wavelength light and the transmittance of long-wavelength light were excellent. Therefore, it was confirmed through this combination that a thin light guide plate could be provided while exhibiting excellent mechanical strength and the total light transmittance.

## Claims

1. A polycarbonate resin composition comprising: polycarbonate and 1,1,5,5-tetramethyl-3,3-diphenyltrisiloxane.

2. The polycarbonate resin composition of claim 1, wherein the 1,1,5,5-tetramethyl-3,3-diphenyltrisiloxane is contained in an amount of 0.01 to 0.3 parts by weight based on 100 parts by weight of the polycarbonate.

3. The polycarbonate resin composition of claim 1, wherein the resin composition further includes an antioxidant, a hydrolysis-resistant agent, a brightness-improving agent or a mixture thereof.

4. The polycarbonate resin composition of claim 3, wherein the antioxidant is a phenol-based antioxidant, a phosphorus-based antioxidant, a thio-based antioxidant, or a mixture thereof.

5. The polycarbonate resin composition of claim 3, wherein the antioxidant is contained in an amount of 0.01 to 0.15 parts by weight based on 100 parts by weight of the polycarbonate.

6. The polycarbonate resin composition of claim 3, wherein the hydrolysis-resistant agent is an epoxy group-containing polymer.

7. The polycarbonate resin composition of claim 3, wherein the hydrolysis-resistant agent is contained in an amount of 0.02 to 0.2 parts by weight based on 100 parts by weight of the polycarbonate.

8. The polycarbonate resin composition of claim 3, wherein the brightness-improving agent is a polymer containing oxyalkylene repeating units.

9. The polycarbonate resin composition of claim 3, wherein the brightness-improving agent is contained in an amount of 0.1 to 0.5 parts by weight based on 100 parts by weight of the polycarbonate.

## Patentansprüche

1. Polycarbonatharzzusammenseztung, umfassend: Polycarbonat und 1,1,5,5-Tetramethyl-3,3-diphenyltrisiloxan.

2. Polycarbonatharzzusammensetzung nach Anspruch 1, wobei das 1,1,5,5-Tetramethyl-3,3-diphenyltrisiloxan in einer Menge von 0,01 bis 0,3 Gewichtsteilen, basierend auf 100 Gewichtsteilen des Polycarbonats, enthalten ist.

3. Polycarbonatharzzusammensetzung nach Anspruch 1, wobei die Harzzusammensetzung ferner ein Antioxidationsmittel, ein Hydrolysebeständigkeitsmittel, ein Glanzverbesserungsmittel oder eine Mischung derselben einschließt.

4. Polycarbonatharzzusammensetzung nach Anspruch 3, wobei das Antioxidationsmittel ein Antioxidationsmittel auf Phenolbasis, ein Antioxidationsmittel auf Phosphorbasis, ein Antioxidationsmittel auf Thiobasis oder eine Mischung derselben ist.

5. Polycarbonatharzzusammensetzung nach Anspruch 3, wobei das Antioxidationsmittel in einer Menge von 0,01 bis 0,15 Gewichtsteilen, basierend auf 100 Gewichtsteilen des Polycarbonats, enthalten ist.

6. Polycarbonatharzzusammensetzung nach Anspruch 3, wobei das Hydrolysebeständigkeitsmittel ein Epoxygruppe-enthaltendes Polymer ist.

7. Polycarbonatharzzusammensetzung nach Anspruch 3, wobei das Hydrolysebständigkeitsmittel in einer Menge von 0,02 bis 0,2 Gewichtsteilen, basierend auf 100 Gewichtsteilen des Polycarbonats, enthalten ist.

8. Polycarbonatharzzusammensetzung nach Anspruch 3, wobei das Glanzverbesserungsmittel ein Polymer enthaltend Oxyalkylen-Wiederholungseinheiten ist.

9. Polycarbonatharzzusammensetzung nach Anspruch 3, wobei das Glanzverbesserungsmittel in einer Menge von 0,1 bis 0,5 Gewichtsteilen, basierend auf 100 Gewichtsteilen des Polycarbonats, enthalten ist.

## Revendications

1. Composition de résine polycarbonate comprenant : du polycarbonate et du 1,1,5,5-tétraméthyl-3,3-diphényltrisiloxane.

2. Composition de résine polycarbonate selon la revendication 1, dans laquelle le 1,1,5,5-tétraméthyl-3,3-diphényltrisiloxane est contenu en une quantité de 0,01 à 0,3 parties en poids par rapport à 100 parties en poids du polycarbonate.

3. Composition de résine polycarbonate selon la revendication 1, la composition de résine renfermant en outre un antioxydant, un agent de résistance à l'hydrolyse, un agent d'amélioration de l'éclat ou un mélange de ceux-ci.

4. Composition de résine polycarbonate selon la revendication 3, dans laquelle l'antioxydant est un antioxydant à base de phénol, un antioxydant à base de phosphore, un antioxydant à base de thio ou un mélange de ceux-ci.

5. Composition de résine polycarbonate selon la revendication 3, dans laquelle l'antioxydant est contenu en une quantité de 0,01 à 0,15 parties en poids par rapport à 100 parties en poids du polycarbonate.

6. Composition de résine polycarbonate selon la revendication 3, dans laquelle l'agent résistant à l'hydrolyse est un polymère contenant un groupe époxy.

7. Composition de résine polycarbonate selon la revendication 3, dans laquelle l'agent résistant à l'hydrolyse est contenu en une quantité de 0,02 à 0,2 parties en poids par rapport à 100 parties en poids du polycarbonate.

8. Composition de résine polycarbonate selon la revendication 3, dans laquelle l'agent d'amélioration de l'éclat est un polymère contenant des motifs récurrents d'oxyalkylène.

9. Composition de résine polycarbonate selon la revendication 3, dans laquelle l'agent d'amélioration de l'éclat est contenu en une quantité de 0,1 à 0,5 parties en poids par rapport à 100 parties en poids du polycarbonate.
